# FASCICULE DE BREVET EUROPEEN

(11) **EP 0 728 706 B1**
(45) Date de publication et mention de la délivrance du brevet: **08.08.2001**
(21) Numéro de dépôt: 96460008.4
(22) Date de dépôt: 22.02.1996
(51) Int. Cl.: C02F 3/30, C02F 3/34

(54) **Procédé et installation pour le traitement des déchets graisseux**
Verfahren und Anlage zur Behandlung von fettigen Abfällen
Process and installation for the treatment of fatty wastes

(30) Priorité: 24.02.1995 FR 9502393
(43) Date de publication de la demande: 28.08.1996
(73) Titulaire: OTV Omnium de Traitements et de Valorisation S.A., 94417 St Maurice Cédex (FR)
(72) Inventeur: Gilles, Pierre, 93270 Sevran (FR); Maillet, Isabelle, 75020 Paris (FR)
(74) Mandataire: Vidon, Patrice

(56) Documents cités:
- DE-A- 2 640 156
- FR-A- 2 669 916
- FR-A- 2 714 043

## Description

L'invention concerne un procédé de traitement des déchets graisseux, notamment ceux provenant des unités de dégraissage des stations d'épuration. Elle concerne également des installations pour la mise en oeuvre d'un tel procédé.

Lors du traitement des effluents aqueux en stations d'épuration, l'une des premières étapes consiste à séparer les graisses des eaux usées. Cette étape de dégraissage est nécessaire compte tenu de l'insolubilité des graisses dans l'eau à température ambiante qui rend leur élimination difficile concomitamment au reste des eaux usées. Ce problème est accru par le fait que les graisses présentent une densité plus faible que celles de l'eau, ce qui les fait flotter. Il est donc préférable de les séparer des effluents lors d'une étape de dégraissage avant de traiter ceux-ci.

Pendant de nombreuses années, ces déchets graisseux n'étaient pas traités et simplement évacués en décharge de façon à permettre leur dégradation à l'air libre. Outre le fait qu'une telle mise en décharge entraîne des nuisances, les exigences en matière de protection de l'environnement ont conduit à la nécessité de traiter ces déchets graisseux.

Une solution mise en oeuvre pour résoudre ce problème a consisté à incinérer ces déchets graisseux, notamment dans les incinérateurs utilisés pour éliminer les boues en excès provenant des stations d'épuration. Toutefois, il n'existe pas toujours de tels incinérateurs à proximité des stations d'épuration.

Il a aussi été envisagé notamment dans FR 2 669 916 de faire subir à ces déchets graisseux des traitements de dégradation biologique. Le traitement biologique des graisses s'effectue ainsi par le développement d'une biomasse adaptée avec des âges de boues élevés dus à la cinétique lente de l'oxydation des graisses.

Certains procédés ont ainsi été mis en oeuvre en utilisant des boues activées. D'autres procédés utilisent des bactéries spécifiques.

Un tel traitement nécessite l'ajout de réactif alcalin pour le maintien du pH entre environ 6,5 et environ 8,5 et, pour assurer les besoins de la synthèse, l'ajout d'azote et de phosphore.

Par ailleurs, un problème posé par les stations d'épuration classiques réside dans le fait que les retours provenant du traitement des boues issues de ces stations accroissent la charge de celles-ci en pollution et notamment la charge en DCO (Demande Chimique en Oxygene), en pollution azotée et en pollution phosphorée.

Lorsque les stations d'épuration incluent une étape de traitement biologique du phosphore des eaux traitées, il est ainsi quasiment impossible d'utiliser des digesteurs pour procéder au traitement de ces boues, car les retours des digesteurs sont alors trop chargés en phosphore pour permettre un fonctionnement correcte de l'étape de déphosphatation, la pollution phosphorée se trouvant alors en partie indéfiniment recyclée.

L'objectif de la présente invention est de proposer un procédé de traitement biologique de tels déchets graisseux ne présentant pas les inconvénients de l'état de la technique.

Un autre objectif de l'invention est de présenter un tel procédé permettant de résoudre le problème posé par les retours provenant du traitements des boues de station d'épuration.

Encore un autre objectif est de présenter un tel procédé pouvant être intégré dans un procédé global de traitement d'effluents. Plus précisément, un des buts de l'invention est de mettre à profit des sous-produits provenant d'un tel traitement global pour participer à la dégradation des graisses en question.

Encore un autre objectif de l'invention est de décrire un procédé simple à mettre en oeuvre et impliquant une économie par rapport aux procédés classiques de traitement des déchets graisseux de l'état de la technique.

Un autre objectif de l'invention est également de présenter des installations pour la mise en oeuvre d'un tel procédé.

Ces différents objectifs sont atteints grâce à l'invention qui concerne un procédé de traitement de déchets graisseux caractérisé en ce qu'il comprend les étapes consistant à mettre en contact lesdits déchets graisseux avec des retours chargés en azote et en phosphore provenant du traitement de boues de station d'épuration et à faire subir au mélange obtenu une aération, continue ou non.

On entend dans la présente description, le terme "retours" comme désignant les effluents aqueux provenant du traitement des boues de station d'épuration, quel que soit ce traitement.

Ainsi l'invention propose de résoudre deux problèmes en même temps.

D'une part, elle permet d'utiliser avantageusement de tels retours de boues comme source d'azote et de phosphore nécessaires à la biomasse utilisée pour dégrader les graisses. Il n'est ainsi en effet plus nécessaire d'avoir recours à des sources d'azote et de phosphore exogènes puisque ces éléments sont apportés par lesdits retours.

D'autre part, l'invention permet également de supprimer l'inconvénient lié au traitement de ces retours puisque l'effluent aqueux provenant du procédé selon l'invention se trouve débarrassé de l'essentiel de sa pollution azotée et de sa pollution phosphorée, ce qui permet de pouvoir le traiter ensuite beaucoup plus facilement sans craindre un recyclage de la pollution. En ce qui concerne l'azote, il a en effet été observé que le procédé permettait non seulement d'éliminer l'azote nécessaire à la biomasse pour dégrader les graisses mais permettait également d'éliminer une quantité supplémentaire d'azote. En ce qui concerne le phosphore, l'invention présente également l'avantage supplémentaire de permettre une élimination de ce composé des retours et donc de faciliter l'emploi de digesteurs pour traiter les boues provenant des stations d'épuration incluant une étape de déphosphatation biologique.

Par ailleurs, le procédé selon l'invention présente également l'avantage de permettre une dilution des déchets graisseux grâce aux retours aqueux mêmes, alors que les procédés existant de traitement biologiques des graisses nécessitent une dilution avec de l'eau exogène ou de l'effluent brut.

En fonction des volumes de retours et donc de la dilution des déchets graisseux provoquée par le mélange des retours avec les déchets graisseux, il sera généralement nécessaire de faire subir au mélange une étape supplémentaire de décantation. Une telle étape de décantation pourra être menée en utilisant un décanteur spécifique ou encore en arrêtant l'aération et le brassage, lorsqu'un brassage sera mis en oeuvre au cours du procédé (ce qui sera le plus souvent le cas), et éventuellement l'alimentation en graisses et en retours pendant un certain temps pour permettre la décantation du mélange, l'évacuation des boues en excès et l'évacuation du surnageant au moins partiellement épuré. Dans le cas ou l'arrivée en retours se fera de façon continue ou semi-continue on pourra utiliser une bâche tampon permettant d'accueillir les retours ou encore utiliser deux réacteurs de façon à permettre, alternativement, la décantation dans l'un et le traitement dans l'autre.

Dans le cadre du présent procédé, il pourra être choisi de nitrifier les retours pour transformer la pollution ammoniaquée de ceux-ci en nitrates mais également d'éliminer ces nitrates par dénitrification.

L'alternance de phases d'aération et de phases de non aération permettant l'élimination de la pollution azotée pourra ainsi être effectuée dans le temps, par arrêt périodique de l'aération, ou dans l'espace en utilisant une zone anoxie amont et une zone aérobie. On pourra ainsi utiliser des réacteurs présentant deux zones, une zone amont anoxique de dénitrification et une zone aérée de nitrification avec recyclage de l'effluent de la zone aérée vers la zone non aérée permettant de réacheminer les nitrates formés dans la zone aérée vers la zone non aérée.

De telles phases d'aération et de non aération selon le procédé de l'invention ont pour objet de créer au sein du milieu une alternance de phases aérobies et anoxiques permettant à la biomasse de conduire à l'élimination de la pollution azotée des retours par nitrification-dénitrification.

Préférentiellement, ledit mélange desdits déchets graisseux avec lesdits retours est effectué en présence d'un réactif alcalin permettant de maintenir le pH du milieu entre environ 6,5 et environ 8,5. En effet, la dégradation des déchets graisseux implique une acidification du milieu qui d'une part peut provoquer des problèmes de corrosion dans les réacteurs mais qui surtout nuit à la bonne activité de la biomasse utilisée pour dégrader ces déchets graisseux. Le réactif utilisé pourra être tout réactif alcalin classiquement utilisé dans les traitements biologiques d'épuration d'effluents.Toutefois, on utilisera préférentiellement de la chaux, ce composé permettant à la fois d'abaisser le pH et de faire précipiter le phosphore. On pourra cependant utiliser tout autre type d'agent alcalin classiquement utilisés tels que la soude, auquel cas on aura recours pour provoquer la précipitation du phosphore à un agent précipitant tel qu'un sel de fer ou un sel d'aluminium. On notera également que, dans certains cas, il pourra ne pas être nécessaire d'ajouter un tel réactif alcalin, si les graisses à dégrader sont d'une origine particulière qui ne leur confère pas une nature trop acide pour empêcher l'action de la biomasse.

Ledit traitement desdites boues pourra comprendre une étape d'épaississement desdites boues, lesdits retours étant constitués au moins en partie par les surverses provenant de ladite étape d'épaississement.

Préférentiellement, ledit traitement desdites boues comprendra une étape de digestion desdites boues, lesdits retours étant constitués à la fois par les surverses d'épaississeurs et de digesteurs.

Ledit traitement desdites boues pourra aussi comprendre une étape de déshydratation des boues provenant de ladite étape de digestion et/ou de ladite étape d'épaississement, lesdits retours étant constitués au moins en partie par les centrats et/ou filtrats provenant de ladite étape de déshydratation.

L'utilisation de digesteurs dans le cadre de la présente invention, présente un avantage supplémentaire. En effet, dans le cadre de la mise en oeuvre d'une digestion des boues, les retours présentent une température qui peut être avantageusement exploitée pour porter le mélange de déchets graisseux et des retours à une température permettant d'optimiser la cinétique de travail des bactéries. Toutefois, généralement les retours de digesteurs présentent une température trop élevée pour être supportée par la biomasse. Le procédé comprendra donc préférentiellement une étape consistant à ajuster la température du mélange à une température comprise entre 25 et 30 °C, notamment en jouant sur les volumes de graisses et de retours.

Préférentiellement, le traitement avec digesteur est effectué avec un âge de boues d'au moins 8 jours. Préférentiellement, cet âge de boues sera compris entre 10 et 15 jours. L'âge de boues constitue un paramètre important, puisque ce paramètre permet de sélectionner des bactéries à cinétique lente aptes à permettre la dégradation des graisses et la nitrification des retours.

Avantageusement, ledit procédé comprend une étape consistant à mélanger au moins une partie desdites boues en excès provenant du traitement desdits déchets graisseux avec lesdites boues de stations d'épuration.

Egalement avantageusement, le procédé comprend une étape consistant à éliminer les mousses se formant lors du traitement des graisses, ou à empêcher leur formation.

Egalement préférentiellement, le procédé selon l'invention comprend une étape consistant à faire subir audit effluent aqueux issu du procédé un traitement ultérieur visant à compléter son épuration.

L'invention concerne également un procédé intégré de traitement biologique d'un effluent aqueux comprenant :
- un prétraitement incluant une étape de dégraissage conduisant à l'obtention de déchets graisseux et à un effluent au moins partiellement dégraissé ;
- un traitement biologique d'épuration dudit effluent aqueux dégraissé conduisant à l'obtention d'un effluent épuré et de boues ;
caractérisé en ce qu'il consiste à mettre en contact lesdits déchets graisseux obtenus lors de ladite étape de dégraissage avec les retours provenant du traitement d'au moins une partie desdites boues, selon le procédé décrit ci-dessus.

On entend par procédé "intégré" un procédé permettant à la fois d'intégrer l'épuration de l'effluent aqueux lui-même mais aussi le traitement des boues en résultant et surtout, selon l'invention, le traitement des déchets graisseux en résultant également.

Avantageusement, un tel procédé intégré comprend une étape consistant à renvoyer ledit effluent provenant du traitement desdits déchets graisseux vers ledit traitement biologique dudit effluent partiellement dégraissé, en vue de compléter son épuration.

L'invention concerne également une installation d'épuration d'effluents aqueux pour la mise en oeuvre du procédé intégré décrit ci-dessus comprenant une chaîne de traitement biologique dudit effluent aqueux incluant des moyens de prétraitement et notamment au moins une unité de dégraissage dudit effluent, des moyens d'épuration biologique de l'effluent dégraissé permettant l'obtention d'un effluent au moins partiellement épuré et de boues et des moyens de traitement par épaississement et la digestion et la deshydratation desdites boues; caractérisée en ce qu'elle comprend :
- une chaîne de traitement des déchets graisseux provenant de ladite unité de dégraissage incluant au moins un bassin pourvu de moyens d'amenée d'au moins une partie des retours ou surverses provenant desdits moyens de traitement des boues, de moyens d'amenée desdits déchets graisseux, de moyens d'aération, de moyens de brassage, de moyens d'évacuation des boues en excès, et de moyens d'évacuation du surnageant.

Comme on l'a déjà mentionné ci-dessus, il sera le plus souvent nécessaire de faire subir au mélange une décantation. Cette décantation pourra être effectuée grâce à un décanteur spécifique. C'est pourquoi, selon une variante de l'invention, ladite installation inclura des moyens de décantation en sortie dudit bassin et des moyens pour évacuer le surnageant résultant de la décantation dudit mélange. Dans une autre variante de l'invention, la décantation du mélange pourra être effectuée par arrêt des moyens de brassage et des moyens d'aération du bassin. Dans un tel cas, ladite chaîne de traitement pourra selon une variante inclure au moins une bâche tampon en amont dudit bassin de façon à recueillir les retours de traitement de boues et/ou les déchets graisseux. En effet, ces déchets arriveront le plus souvent en continu et une telle bâche pourra autoriser le stockage de ceux-ci pendant la mise en décantation du contenu du bassin de traitement. Selon une autre variante, l'installation comprendra au moins deux bassins montés en parallèle, et fonctionnant tour à tour, l'un en décantation, l'autre en traitement des graisses.

Egalement comme mentionné ci-dessus, l'alternance des phases d'aération et de non aération du mélange pourra être effectuée dans le temps en arrêtant périodiquement l'aération dans le bassin de traitement. Toutefois, selon une variante, l'installation pourra inclure une zone anoxie prévue en amont du bassin. Selon une autre variante, cette zone amont sera intégrée audit bassin, celui-ci présentant alors une zone anoxie et une zone aérée. Dans les deux cas, un recyclage de l'effluent sera prévu de la zone aérée vers la zone anoxie de façon à réacheminer les nitrates formés dans la zone aérée vers la zone anoxie.

Préférentiellement, ledit bassin comprendra des moyens d'évacuation ou de traitement des mousses qui pourront se former lors dudit traitement des graisses. Il est en effet fréquent que le traitement biologique des graisses conduise à l'obtention de quantités importantes de mousses qui peuvent gêner le bon fonctionnement du bassin de traitement. Ces moyens pourront être constitués par tout type de moyens d'évacuation ou de destruction de ces mousses, hydrauliques ou mécaniques, tels que par exemple des gicleurs. On pourra également utiliser des moyens de distribution d'agents anti-moussants.

Préférentiellement, ladite installation comprendra au moins un dispositif de traitement des retours de boues choisi dans le groupe constitué par les digesteurs, les épaississeurs et les déshydrateurs. Comme déjà mentionné, dans le cas où au moins un digesteur est utilisé, le procédé selon l'invention facilite le traitement des boues provenant de station d'épuration incluant une étape de déphosphatation biologique.

Egalement préférentiellement, ladite installation inclut des moyens de recyclage d'au moins une partie desdites boues en excès en tête de ladite chaîne de traitement des boues.

Avantageusement, ladite installation inclut des moyens d'amenée d'un réactif alcalin dans ledit bassin.

Enfin, selon une variante intéressante de l'invention, lorsque cette instatallation inclura au moins un digesteur, elle inclura aussi des moyens d'ajustement des volumes desdits retours et/ou desdits déchets graisseux de façon à fixer la température dudit mélange à une température comprise entre 25 et 30°C. Il sera ainsi possible de tirer profit de la température desdits retours pour porter le mélange de retours et de déchets graisseux à une température optimisée.

Préférentiellement, ladite installation inclut des moyens de recyclage d'au moins une partie du surnageant provenant dudit bassin dans ladite chaîne de traitement biologique de l'effluent aqueux.

Avantageusement, l'installation sera caractérisée par le fait que ladite chaîne de traitement biologique dudit effluent inclut des moyens de traitement biologique du phosphore et en ce que lesdits moyens de traitement des boues incluent au moins un digesteur.

L'invention, ainsi que les différents avantages qu'elle présente, seront plus facilement compris grâce à la description qui va suivre de deux modes de réalisation non limitatifs d'installations mettant en oeuvre le procédé selon l'invention, en référence aux dessins dans lesquels :
- la figure 1 représente schématiquement un premier mode de réalisation d'une installation selon l'invention permettant concomitamment le traitement d'effluents aqueux, le traitement par épaississement et déshydratation des boues et le traitement des déchets graisseux issus de ces effluents ;
- la figure 2 représente schématiquement un second mode de réalisation d'une installation selon l'invention permettant concomitamment le traitement d'effluents aqueux, le traitement par digestion des boues et le traitement des déchets graisseux issus de ces effluents.

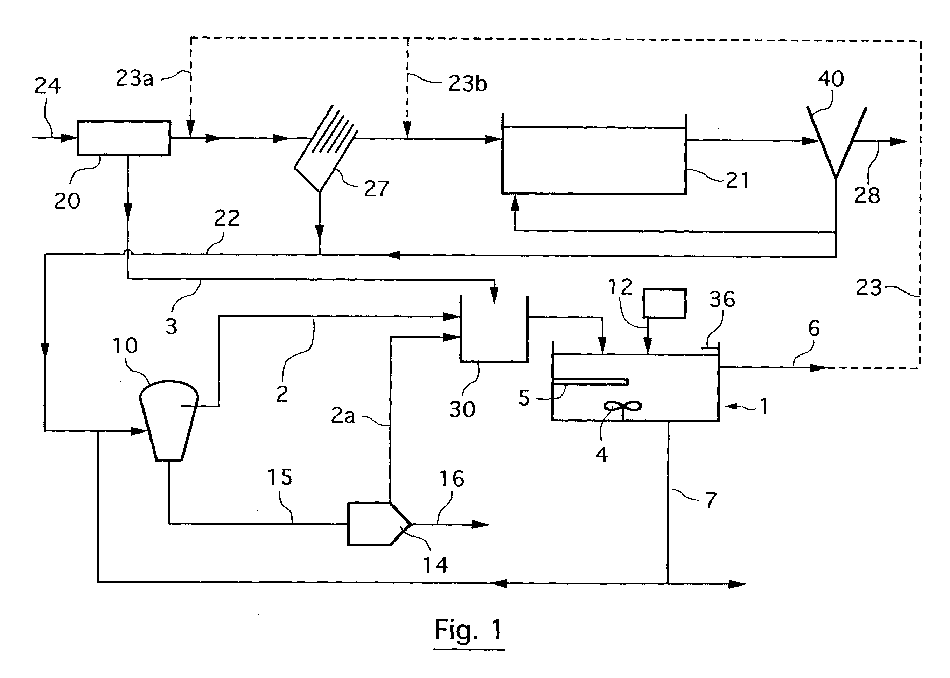

En référence à la figure 1, l'installation représentée comprend une chaîne de traitement d'épuration d'effluents aqueux conduisant en sortie à un effluent épuré et à la production de boues. Cette installation présente également des moyens de traitement des boues formées. Selon l'invention, une telle installation intègre également des moyens de traitement des déchets graisseux provenant du processus d'épuration de l'effluent conjointement avec les retours desdites boues.

Plus précisément une telle installation comprend des moyens de prétraitement incluant une unité de dégraissage 20 conforme à celles utilisées dans l'état de la technique, l'effluent à épurer arrivant au niveau de cette unité par une canalisation 24 après avoir subit un dégrillage et un dessablage. L'effluent dégraissé est ensuite acheminé vers un traitement physique et biologique, les graisses retenues par l'unité de dégraissage 20 en question étant par ailleurs évacuées par une canalisation 3 pour subir le traitement biologique selon l'invention et qui sera décrit plus en détails ci-après.

L'effluent dégraissé subit ensuite un traitement biologique classique constitué par un traitement primaire incluant une décantation 27, un traitement biologique 21 (avec recirculation des boues) et un clarificateur 40, l'effluent épuré étant récupéré en 28

Par ailleurs, l'installation comprend une chaîne de traitement des boues produites lors du traitement de l'effluent dégraissé et extraites par la canalisation 22 à partir du séparateur lamellaire 27 et du clarificateur 40. Cette chaîne de traitement inclut, d'une façon classique un épaississeur 10 dont le fonctionnement aboutit à la formation de surverses aqueuses et de boues épaissies et un déshydrateur 14 pour traiter les boues épaissies provenant de cet épaississeur 10. A cet effet, des moyens 15 sont prévus pour acheminer les boues épaissies vers le déshydrateur 14. Ce déshydrateur 14 permet l'obtention de boues déshydratées récupérés en 16, boues déshydratées qui peuvent ensuite subir éventuellement une incinération, et conduit également à l'obtention de surverses aqueuses.

Tant les surverses obtenues à la sortie de l'épaississeur 10 que celles obtenues à la sortie du déshydrateur 14 sont chargées en azote et en phosphore.

L'installation comprend par ailleurs et selon l'invention des moyens permettant de traiter les déchets graisseux provenant de l'unité de dégraissage 20 conjointement avec ces surverses.

Ces moyens incluent un bassin de traitement 1 présentant des moyens de brassage 4, des moyens d'aération 5 et des moyens d'évacuation 7 des boues en excès et des moyens 6 pour évacuer le surnageant. Un bassin tampon 30 est prévu en amont de ce bassin de traitement 1 afin de recevoir les retours et les graisses arrivant par les canalisations 2 et 2a (pour les surverses en provenance respectivement de l'épaississeur 10 et du déshydrateur 14) et par la canalisation 3 (pour les graisses). Le bassin 1 est également couplé à des moyens d'amenée 12 d'un réactif alcalin qui, dans le cadre du présent mode de réalisation, est constitué par de la chaux. Ce réactif permet d'amener le pH du mélange constitué par les surverses provenant de l'épaississeur 10 et du déshydrateur 14 et des déchets graisseux à une valeur d'environ 6,5 à 8,5 et avantageusement de précipiter le phosphore non utilisé par la biomasse. Le bassin est aussi équipé de gicleurs 36 permettant d'évacuer les mousses formées.

Au cours de l'utilisation de l'installation selon l'invention représentée à la figure 1, le fonctionnement du bassin 1 est syncopé en deux phases:
- une première phase d'alternance marche-arrêt des moyens d'aération 5 avec maintien du brassage pour séquencer dans le temps la nitrification-dénitrification des graisses par alternance de phases aérobies et anoxies ;
- une deuxième phase de décantation avec arrêt des moyens de brassage 4 pour extraire le surnageant et les boues en excès et recompléter en mélange à traiter (graisses + surverses de l'épaississeur 10 et du déshydrateur 14).

On comprendra que les durées de ces différentes phases et notamment les durées d'aération et de non aération pourront amplement varier en fonction de nombreux paramètres. Ces durées varieront notamment en fonction de la composition des surverses et notamment de leur teneur en phosphore et en azote, de l'âge des boues nécessité pour obtenir une bonne dégradation des graisses, de la quantité de déchets graisseux à traiter, etc...

Le surnageant extrait du bassin 1 est ensuite renvoyé en totalité vers la chaîne de traitement de l'effluent dégraissé par les moyens 23. Ces moyens permettent la distribution du surnageant en partie en amont de l'unité de décantation 27, par la canalisation 23a et en partie en amont des moyens de traitement biologiques 21, par la canalisation 23b.

Durant la deuxième phase de décantation, l'alimentation du bassin 1 est stoppée et les graisses et les retours arrivant respectivement de l'unité de dégraissage 20 et de l'épaississeur 10 et du déshydrateur 14, sont stockés dans le réservoir tampon 30.

L'installation décrite permet ainsi le traitement d'épuration complet des déchets graisseux provenant de l'unité de dégraissage, l'utilisation avantageuse du phosphore et de l'azote contenu dans les surverses pour procéder à cette dégradation, et l'obtention d'un effluent en sortie de bassin 1 pouvant être facilement traité par les moyens de traitement biologique 21.

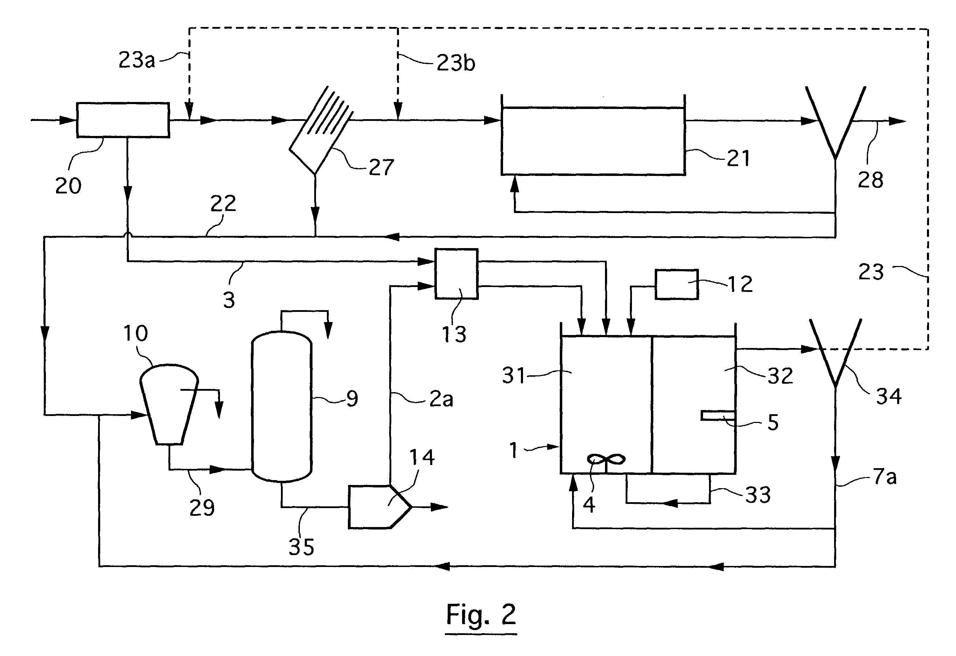

Selon la figure 2, le second mode de réalisation de l'installation selon l'invention diffère du premier mode de réalisation décrit ci-dessus au niveau de la chaîne de traitement des boues, cette chaîne incluant outre un épaississeur 10 et un déshydrateur 14, également un digesteur 9. L'invention offre en effet un intérêt accru, lorsqu'un tel digesteur est utilisé pour traiter les boues puisque les boues digérées sont fortement chargées en azote et en phosphore. Comme déjà mentionné, l'invention permet l'emploi d'un digesteur pour traiter les boues issues d'un traitement biologique incluant une étape de traitement biologique du phosphore, ce qui n'était pratiquement pas possible dans les installations de l'état de la technique.

Les boues épaissies dans l'épaississeur 10 sont envoyées par une canalisation 29 vers le digesteur 9, les surverses de l'épaississeur étant par ailleurs écartées pour être éventuellement renvoyées vers la chaîne de traitement biologique de l'effluent dégraissé ou des déchets graisseux.

Le boues digérées issues du digesteur 9 sont ensuite dirigées vers le déshydrateur 14 par une canalisation 35, les surverses du déshydrateur 14 étant quant à elles, selon l'invention envoyées vers le bassin 1grâce à la canalisation 2a pour permettre le traitement des déchets graisseux dans le bassin 1. Dans le cadre de ce présent mode de réalisation, les surverses du digesteur 9 sont écartées, mais dans certains autres modes de réalisation permettant l'obtention de telles surverses claires, il pourra aussi être envisagé de les utiliser également pour le traitement des graisses.

L'installation comprend aussi des moyens 13 permettant de jouer sur le rapport entre le volume des retours provenant du déshydrateur 14 et les volumes de déchets graisseux provenant de l'unité de dégraissage 20. Ces moyens permettent de maintenir la température du mélange à une température permettant l'optimisation de la cinétique des bactéries tout en veillant à ce que cette température ne dépasse pas 26°C, et qui dans le cadre du présent exemple de réalisation est de 25°C. Il est ainsi possible d'utiliser avantageusement la chaleur des surverses due à l'utilisation d'un digesteur, les retours de digesteur présentant, toujours dans la cadre du présent exemple, une température comprise entre 33°C et 37°C.

Le bassin 1 présente quant à lui deux zones distinctes, une première zone 31 anoxie amont munie de moyens de brassage 4 dans laquelle est effectuée la dénitrification du mélange de graisses et de surverses et une zone 32 aérée pourvue de moyens d'aération 5 dans laquelle est effectuée la nitrification du mélange. Des moyens de recyclage 33 de l'effluent nitrifié sont par ailleurs prévu pour permettre le réacheminement des nitrates dans la zone anoxie amont.

Ainsi, il n'est plus besoin d'avoir recours à un fonctionnement du bassin avec arrêt périodique de l'aération, le processus de nitrification-dénitrification étant provoqué par les passages successifs du mélange dans la zone anoxie 31 et dans la zone aérée.

Enfin, l'installation comprend également un décanteur 34 permettant de recueillir l'effluent sortant du bassin 1. Le surnageant provenant de ce décanteur est renvoyé vers les moyens 23 tandis que les boues sont renvoyées vers l'épaississeur 10 par la canalisation 7a. Il n'est ainsi plus nécessaire d'avoir recours à un bassin tampon 30 comme dans le mode de réalisation représenté à la figure 1.

Les installations décrites en référence aux figures 1 et 2 ont été testées avec une charge d'eaux brutes à traiter de 15000 équivalents habitants selon un débit de 2700 m³ par jour. L'installation intégrant un digesteur a été testée avec un âge de boues de 15 jours.

Ces tests ont été menées avec les composition d'eau brute, de déchets graisseux et de surverses présentant les compositions suivantes.

### Composition de l'eau brute :

Flux de DCO = 1649,7 kg/j
Flux de NTK 210,6 kg/j (* Azote total kjeldahl)
Flux de P = 59,4 kg/j

### Composition des déchets graisseux obtenus en sortie de l'unité de dégraissage 20 :

Flux de DCO = 133,7 kg/j
Flux de MEH (Matières extractibles à l'hexane) = 44,8 kg/j

### Composition des surverses dans le cadre de l'installation représenté à la figure 1 n'intégrant pas de digestion des boues :

Flux de NTK =4 à 8 % du flux de NTK de l'eau brute soit 8,4 à 16,8 kg/j
Flux de phosphore A = 2 à 3 % du flux de P de l'eau brute soit 1,2 à 1,8 kg/j.

Dans le cadre du présent mode de réalisation, la phase de décantation est effectuée toutes les 2 heures pendant, une demi-heure.

La température dans le bassin 1 est de 12°C avec un âge de boues de 20 jours.Le volume de ce bassin 1 est de 58 m³.

### Composition des surverses dans le cadre de l'installation représentée à la figure 2 intégrant une digestion des boues :

à l'entrée du digesteur:
Flux de NTK = 26,8 % du flux de NTK de l'eau brute soit 56,4 kg kg/j
Flux de P =21,4 % du flux de P de l'eau brute soit 12,7 kg/j. surverses du traitement des boues digérées:
Flux de NTK = 20 % du flux de NTK de l'eau brute soit 42 kg/j
Flux de P = 15 % du flux de P de l'eau brute soit 9,1 kg/j.

Dans le cadre de ce second mode de réalisation, le bassin présente, un volume global de 48 m³, la température est de 25°C et l'âge de boues dans le bassin 1 est de 15 jours.

La biomasse dégradant les graisses a besoin pour sa synthèse d'azote et de phosphore dans les proportions suivantes:
- azote : 2,5 % de la DCO des graisses donc : 3;3kg/j
- phosphore : 0, 5 % de la DCO des graisses donc 0,66kg/j

Dans le cadre de la mise en oeuvre de l'installation décrite à la figure 2 (intégrant un digesteur), les retours de boues provenant du digesteur étant très chargés en azote, le bassin 1 permet de traiter à la fois les graisses et l'azote.

Dans le cadre de la mise en oeuvre de l'installation décrite à la figure 1 (n'intégrant pas de digesteur), les flux d'azote et de phosphore retournés par le traitement des boues sont proches des besoins pour la synthèse des graisses et l'on traite l'azote au prorata de sa disponibilité.

Les modes de réalisation de l'invention décrite ci-dessus, n'ont pas pour objet de réduire la portée de l'invention. En particulier, il pourra être envisagé de mettre en oeuvre le procédé avec d'autres moyens de traitement biologique de l'effluent dégraissé ou d'autres moyens de traitement biologique des boues.

## Revendications

1. Procédé de traitement de déchets graisseux caractérisé en ce qu'il comprend les étapes consistant à mettre en contact lesdits déchets graisseux avec des retours chargés en azote et en phosphore provenant du traitement de boues de station d'épuration et à faire subir au mélange obtenu une aération, continue ou non.

2. Procédé selon la revendication 1 caractérisé en ce qu'il comprend une étape supplémentaire consistant à faire subir audit mélange une décantation dans un décanteur séparé avec recyclage des boues.

3. Procédé selon la revendication 2 caractérisé en ce que ladite étape de décantation est effectuée par arrêt périodique de l'aération, et éventuellement du brassage, du mélange de façon à permettre sa décantation, l'évacuation des boues en excès et l'évacuation du surnageant au moins partiellement épuré.

4. Procédé selon l'une des revendications 1 à 3 caractérisé en ce qu'il comprend une étape consistant à faire subir au mélange obtenu une alternance dans le temps de phases d'aération et de non aération de façon à autoriser l'abattement de sa pollution azotée par nitrification-dénitrification.

5. Procédé selon l'une des revendications 1 à 3 caractérisé en ce qu'il comprend une étape consistant à faire transiter ledit mélange dans une zone anoxique puis dans une zone aérée, avec recyclage du mélange de la zone aérée vers la zone anoxique de façon à autoriser l'abattement de sa pollution azotée par nitrification-dénitrification.

6. Procédé selon l'une des revendications 1 à 5 caractérisé en ce que ledit mélange desdits déchets graisseux avec lesdits retours est effectué en présence d'un réactif alcalin permettant de maintenir le pH entre environ 6,5 et 8,5.

7. Procédé selon la revendication 6 caractérisé en ce que ledit réactif alcalin est de la chaux permettant de surcroît la précipitation de la pollution phosphorée.

8. Procédé selon l'une des revendications 1 à 7 caractérisé en ce ce qu'il comprend un étape consistant à ajouter audit mélange au moins un sel métallique permettant de précipiter la pollution phosphorée.

9. Procédé selon l'une des revendications 1 à 8 caractérisé en ce que ledit traitement desdites boues de station d'épuration comprend une étape d'épaississement et/ou déshydratation desdites boues, lesdits retours étant constitués au moins en partie par les surverses provenant de ladite étape d'épaississement et/ou de ladite étape de déshydratation.

10. Procédé selon la revendication 9 caractérisé en ce que ledit traitement desdites boues comprend une étape de digestion desdites boues, lesdits retours étant constitués en partie par les surverses provenant de ladite étape de digestion et en partie par les surverses provenant de l'étape d'épaississement et/ou de déshydratation.

11. Procédé selon la revendication 10 caractérisé en ce qu'il comprend une étape consistant à ajuster la température dudit mélange à une température inférieure à environ 26°C.

12. Procédé selon l'une des revendications 1 à 11 caractérisé en ce qu'il consiste à faire subir à l'effluent aqueux issu dudit procédé un traitement ultérieur visant à compléter son épuration.

13. Procédé intégré de traitement biologique d'un effluent aqueux comprenant:
- un prétraitement incluant une étape de dégraissage conduisant à l'obtention de déchets graisseux et à un effluent au moins partiellement dégraissé ;
- un traitement biologique d'épuration dudit effluent aqueux dégraissé conduisant à l'obtention d'un effluent épuré et de boues ;
caractérisé en ce qu'il consiste à mettre en contact lesdits déchets graisseux obtenus lors de ladite étape de dégraissage avec les retours provenant du traitement d'au moins une partie desdites boues, selon le procédé selon l'une des revendications 1 à 12.

14. Procédé intégré selon la revendication 13 caractérisé en ce qu'il comprend une étape consistant à renvoyer l'effluent aqueux provenant du traitement desdits déchets graisseux vers ledit traitement biologique dudit effluent partiellement dégraissé.

15. Installation d'épuration d'effluents aqueux pour la mise en oeuvre du procédé intégré selon l'une des revendications 13 ou 14 comprenant une chaîne de traitement biologique dudit effluent aqueux incluant des moyens de prétraitement et notamment au moins une unité de dégraissage (20) dudit effluent, et des moyens d'épuration biologique (21) de l'effluent dégraissé permettant l'obtention d'un effluent au moins partiellement épuré et de boues, et des moyens de traitement par épaississement (10) et/ou digestion et/ou déshydratation (14) desdites boues,
caractérisée en ce qu'elle comprend
- une chaîne de traitement des déchets graisseux provenant de ladite unité de dégraissage (20)incluant au moins un bassin (1) pourvu de moyens d'amenée (2,2a) desdits retours ou surverses provenant desdits moyens de traitement (10, 14) des boues, de moyens d'amenée (3) d'au moins une partie des déchets graisseux provenant de ladite unité de dégraissage (20), de moyens d'aération (5), de moyens de brassage (4), et de moyens (7) d'évacuation des boues en excès et de moyens (6) d'évacuation du surnageant.

16. Installation selon la revendication 15 caractérisée en ce qu'elle inclut une bâche tampon (30) en amont dudit bassin (1).

17. Installation selon l'une des revendications 15 ou 16 caractérisée en ce qu'elle inclut des moyens (36) d'évacuation ou de traitement des mousses formées lors dudit traitement des graisses.

18. Installation selon l'une des revendications 15 à 17 caractérisée en ce qu'elle inclut des moyens d'ajustement des volumes desdits retours et/ou desdits déchets graisseux de façon à fixer la température dudit mélange à une température inférieure à environ 26°C.

19. Installation selon l'une des revendications 15 à 18 caractérisée en ce qu'elle inclut des moyens de recyclage (23) d'au moins une partie du surnageant provenant dudit bassin (1) dans ladite chaîne de traitement biologique de l'effluent aqueux.

## Patentansprüche

1. Verfahren zur Behandlung fetthaltiger Abfälle,
dadurch gekennzeichnet, daß es aus den Schritten besteht, nämlich die fetthaltigen Abfälle zunächst mit stickstoff- und phosphorhaltigen Rückläufen aus der Schlammbehandlung in einer Kläranlage in Berührung zu bringen und dann das erhaltene Gemisch kontinuierlich oder nicht kontinuierlich zu belüften.

2. Verfahren nach Anspruch 1,
dadurch gekennzeichnet, daß es einen zusätzlichen Schritt umfaßt, bei dem das Gemisch in einem getrennten Klärbecken dekantiert wird, wobei die Schlämme rezykliert werden.

3. Verfahren nach den Ansprüchen 1 und 2,
dadurch gekennzeichnet, daß der Dekantierschritt bei periodischer Unterbrechung der Belüftung und eventuellem Rühren des Gemischs erfolgt, um das Dekantieren, das Entfernen überschüssigen Schlamms sowie des wenigstens teilweise geklärten aufschwimmenden Anteils zu ermöglichen.

4. Verfahren nach einem der Ansprüche 1 bis 3,
dadurch gekennzeichnet, daß es einen Schritt umfaßt, bei dem das erhaltene Gemisch zeitlich abwechselnde Phasen der Belüftung und der Nichtbelüftung unterworfen wird, um die Unterdrückung der stickstoffhaltigen Verunreinigungen durch Nitrierung-Denitrierung zu ermöglichen.

5. Verfahren nach einem der Ansprüche 1 bis 3,
dadurch gekennzeichnet, daß es einen Schritt umfaßt, bei dem das Gemisch einen Bereich unter Luftabschluß und dann einen belüfteten Bereich durchläuft, wobei das Gemisch aus dem belüfteten Bereich zum Bereich unter Luftabschluß rezykliert wird, um die Unterdrückung der stickstoffhaltigen Verunreinigungen durch Nitrierung-Denitrierung zu ermöglichen.

6. Verfahren nach einem der Ansprüche 1 bis 5,
dadurch gekennzeichnet, daß das Gemisch aus fetthaltigen Abfällen und Rückläufen in Gegenwart eines alkalinen Reagens abläuft, welches das Aufrechterhalten eines pH-Wertes zwischen etwa 6,5 und 8,5 ermöglicht.

7. Verfahren nach Anspruch 6,
dadurch gekennzeichnet, daß es sich beim alkalinen Reagens um Kalk handelt, was darüber hinaus das Ausfällen der phosphorhaltigen Verunreinigungen ermöglicht.

8. Verfahren nach einem der Ansprüche 1 bis 7,
dadurch gekennzeichnet, daß es einen Schritt umfaßt, bei dem mindestens ein Metallsalz dem Gemisch hinzugefügt wird, um das Ausfällen der phosphorhaltigen Verunreinigungen zu ermöglichen.

9. Verfahren nach einem der Ansprüche 1 bis 8,
dadurch gekennzeichnet, daß die Schlammbehandlung aus der Kläranlage eine Stufe des Eindicken und/oder des Entwässern der Schlämme umfaßt, wobei die Rückläufe mindestens zum Teil aus dem Überlauf beim Eindicken und/oder beim Entwässern gebildet werden.

10. Verfahren nach Anspruch 9,
dadurch gekennzeichnet, daß die Schlammbehandlung einen Schritt der Zersetzung umfaßt, wobei die Rückläufe zum Teil aus dem Überlauf vom Zersetzungsschritt und zum Teil aus dem Überlauf beim Eindicken und/oder beim Entwässern gebildet werden.

11. Verfahren nach Anspruch 10,
dadurch gekennzeichnet, daß es einen Schritt umfaßt, bei dem die Temperatur des Gemischs auf einen Wert unterhalb 26 _C eingestellt wird.

12. Verfahren nach einem der Ansprüche 1 bis 11,
dadurch gekennzeichnet, daß der wäßrige Ablauf aus dem erwähnten Verfahren eine weitere Behandlung erfährt, um seine Reinigung zu vervollständigen.

13. Integrales biologisches Behandlungsverfahren für wäßrige Abläufe, das die folgenden Schritte umfaßt:
- eine Vorbehandlung, die eine Stufe der Entfettung enthält, aus der sich fetthaltige Abfälle und ein zumindest teilweise entfettetes Abwasser ergeben;
- eine biologische Behandlung des entfetteten wäßrigen Abwassers, aus der sich ein gereinigtes Abwasser und Schlämme ergeben;
dadurch gekennzeichnet, daß es darin besteht, die beim Entfetten erhaltenen fetthaltigen Abfälle mit den Rückläufen aus der Behandlung von mindestens einen Teil der Schlämme in Berührung zu bringen, entsprechend dem Verfahren nach einem der Ansprüche 1 bis 12.

14. Integrales Verfahren nach Anspruch 13,
dadurch gekennzeichnet, daß es einen Schritt umfaßt, bei dem der wäßrige Ablauf aus der Behandlung der fetthaltigen Abfälle zur biologischen Behandlung des teilweise entfetteten Abwassers geleitet wird.

15. Reinigungsanlage für wäßrige Abwässer zur Anwendung des integralen Verfahrens nach einem der Ansprüche 13 oder 14, die eine biologische Behandlungskette des wäßrigen Abwassers umfaßt, welche Mittel zum Vorbehandeln umfaßt, insbesondere mindestens eine Einheit zum Entfetten (20) des Abwassers sowie biologische Reinigungsmittel (21) für das entfettete Abwasser, die das Erhalten eines zumindest teilweise entschlammten Abwassers ermöglichen sowie Mittel zur Behandlung durch Eindicken (10) und/oder Zersetzung und/oder Entwässerung (14) der Schlämme,
dadurch gekennzeichnet, daß sie folgendes umfaßt:
- eine Kette zum Behandeln der fetthaltigen Abfälle, die aus der Entfettungseinheit (20) stammen, die mindestens ein Becken (1) umfaßt, das über Mittel zum Einleiten (2, 2a) der Rück- oder Überläufe aus den Mitteln (10, 14) zum Behandeln der Schlämme, über Mittel zum Einleiten (3) von mindestens einem Teil der fetthaltigen Abfälle, die aus der Entfettungseinheit (20) stammen, über Belüftungsmittel (5), über Rührmittel (4) sowie über Mittel (7) zum Ableiten des überschüssigen Schlamms und über Mittel (6) zum Ablassen des überschwimmenden Anteils verfügt.

16. Anlage nach Anspruch 15,
dadurch gekennzeichnet, daß sie einen Ausgleichbehälter (30) vor dem Becken (1) umfaßt.

17. Anlage nach einem der Ansprüche 15 oder 16,
dadurch gekennzeichnet, daß sie Mittel (36) zum Ablassen oder zum Behandeln des Schaums umfaßt, der bei der Fettbehandlung anfällt.

18. Anlage nach einem der Ansprüche 15 bis 17,
dadurch gekennzeichnet, daß sie Mittel zum Einstellen der Volumina der Rücklaufe und/oder der fetthaltigen Abfälle umfaßt, um die Temperatur des Gemischs bei einem Wert unterhalb von 26 _C einzustellen.

19. Anlage nach einem der Ansprüche 15 bis 18,
dadurch gekennzeichnet, daß sie Mittel zum Rezyklieren (23) von mindestens einen Teil der überschwimmenden Flüssigkeit aus dem Becken (1) in der biologischen Behandlungskette des wäßrig Abwassers umfaßt.

## Claims

1. Process of the treatment of fatty waste, characterized in that it comprises stages which consist in bringing the said fatty waste into contact with returned material laden with nitrogen and with phosphorus originating from the treatment of purification plant sludge and in subjecting the mixture obtained to a continuous or non-continuous aeration.

2. Process according to Claim 1, characterized in that it comprises an additional stage which consists in subjecting the said mixture to sedimentation in a separate sedimentation tank with recycling of the sludge.

3. Process according to Claims 1 and 2, characterized in that the said sedimentation stage is carried out by periodically halting the aeration and optionally the stirring of the mixture, so as to allow its sedimentation, the discharge of the excess sludge and the discharge of the at least partially purified sludge water.

4. Process according to one of Claims 1 to 3, characterized in that it comprises a stage which consists in subjecting the mixture obtained to an alternation over time of phases of aeration and of non-aeration, so as to allow its nitrogenous contamination to be reduced by nitrification-denitrification.

5. Process according to one of Claims 1 to 3, characterized in that it comprises a stage which consists in passing the said mixture into an anoxic region and then into an aerated region, with recycling of the mixture from the aerated region to the anoxic region, so as to allow its nitrogenous contamination to be reduced by nitrification-denitrification.

6. Process according to one of Claims 1 to 5, characterized in that the said mixing of the said fatty waste with the said returned material is carried out in the presence of an alkaline reagent which makes it possible to maintain the pH between approximately 6.5 and 8.5.

7. Process according to Claim 6, characterized in that the said alkaline reagent is lime, which makes it possible, moreover, to precipitate phosphorus-comprising contaminants.

8. Process according to one of Claims 1 to 7, characterized in that it comprises a stage which consists in adding to the said mixture at least one metal salt which makes it possible to precipitate phosphorus-comprising contaminants.

9. Process according to one of Claims 1 to 8, characterized in that the said treatment of the said purification plant sludge comprises a stage of thickening and/or dewatering the said sludge, the said returned material being composed, at least in part, of the upper flows originating from the said thickening stage and/or from the said dewatering stage.

10. Process according to Claim 9, characterized in that the said treatment of the said sludge comprises a stage of digestion of the said sludge, the said returned material being composed in part of the upper flows originating from the said digestion stage and in part of the upper flows originating from the stage of thickening and/or dewatering.

11. Process according to Claim 10, characterized in that it comprises a stage which consists in adjusting the temperature of the said mixture to a temperature of less than approximately 26°C.

12. Process according to one of Claims 1 to 11, characterized in that it consists in subjecting the aqueous effluent resulting from the said process to a subsequent treatment targeted at completing its purification.

13. Integrated process for the biological treatment of an aqueous effluent comprising:
- a pre-treatment which includes a fat-removing stage which results in the production of fatty waste and in an at least partially defatted effluent;
- a biological treatment for the purification of the said defatted aqueous effluent which results in the production of a purified effluent and of sludge;
characterized in that it consists in bringing the said fatty waste obtained during the said fat-removing stage into contact with the returned material originating from the treatment of at least a portion of the said sludge according to the process according to one of Claims 1 to 12.

14. Integrated process according to Claim 13, characterized in that it comprises a stage which consists in conveying the aqueous effluent originating from the treatment of the said fatty waste to the said biological treatment of the said partially defatted effluent.

15. Installation for the purification of aqueous effluents for the implementation of the integrated process according to either of Claims 13 and 14 which comprises a line for the biological treatment of the said aqueous effluent which includes pre-treatment means and in particular at least one unit (20) for removing fat from the said effluent, and means (21) for biological purification of the defatted effluent which make it possible to obtain an at least partially purified effluent and sludge, and means for treatment by thickening (10) and/or digesting and/or dewatering (14) the said sludge,
characterized in that it comprises:
- a line for treatment of the fatty waste originating from the said fat-removing unit (20) including at least one tank (1) provided with means (2,2a) for introducing the said returned material or upper flows originating from the said means (10, 14) for treating the sludge, with means (3) for introducing at least a portion of the fatty waste originating from the said fat-removing unit (20), with aeration means (5), with stirring means (4), with means (7) for discharging the excess sludge and with means (6) for discharging the sludge water.

16. Installation according to Claim 15, characterized in that it includes a holding vessel (30) upstream of the said tank (1).

17. Installation according to either of Claims 15 and 16, characterized in that it includes means (36) for discharge or treatment of the foam formed during the said treatment of the fat.

18. Installation according to one of Claims 15 to 17, characterized in that it includes means for adjusting the volumes of the said returned material and/or of the said fatty waste, so as to fix the temperature of the said mixture at a temperature of less than approximately 26°C.

19. Installation according to one of Claims 15 to 18, characterized in that it includes means (23) for recycling at least a portion of the sludge water originating from the said tank (1) in the said line for the biological treatment of the aqueous effluent.
